# EUROPÄISCHE PATENTSCHRIFT

(11) **EP 1 569 823 B1**
(45) Veröffentlichungstag und Bekanntmachung des Hinweises auf die Patenterteilung: **09.08.2006**
(21) Anmeldenummer: 03785731.5
(22) Anmeldetag: 04.12.2003
(51) Int. Cl.: B60R 21/01, G06K 9/00

(54) **VERFAHREN UND VORRICHTUNG ZUR BESTIMMUNG DER 3D-POSITION VON PKW-INSASSEN**
METHOD AND DEVICE FOR DETERMINING A THREE-DIMENSION POSITION OF PASSENGERS OF A MOTOR CAR
PROCEDE ET DISPOSITIF PERMETTANT DE DETERMINER LA POSITION TRIDIMENSIONNELLE DES OCCUPANTS D'UNE VOITURE PARTICULIERE

(30) Priorität: 12.12.2002 DE 10257963
(43) Veröffentlichungstag der Anmeldung: 07.09.2005
(73) Patentinhaber: DaimlerChrysler AG, 70567 Stuttgart (DE)
(72) Erfinder: FRITZSCHE, Martin, 88400 Biberach (DE); SCHWARZ, Tilo, 89075 Ulm (DE)
(86) Internationale Anmeldenummer: PCT/EP2003/013685
(87) Internationale Veröffentlichungsnummer: WO 2004/052691

(56) Entgegenhaltungen:
- EP-A- 0 703 094
- EP-A- 1 134 691
- WO-A-99/53430
- US-A- 6 088 640
- US-A1- 2001 000 025
- US-B1- 6 463 176
- COLOMBO C ET AL: "Real-time head tracking from the deformation of eye contours using a piecewise affine camera" PATTERN RECOGNITION LETTERS, NORTH-HOLLAND PUBL. AMSTERDAM, NL, Bd. 20, Nr. 7, Juli 1999 (1999-07), Seiten 721-730, XP004173760 ISSN: 0167-8655
- DEVY M ET AL: "Detection and classification of passenger seat occupancy using stereovision" INTELLIGENT VEHICLES SYMPOSIUM, 2000. IV 2000. PROCEEDINGS OF THE IEEE DEARBORN, MI, USA 3-5 OCT. 2000, PISCATAWAY, NJ, USA,IEEE, US, 3. Oktober 2000 (2000-10-03), Seiten 714-719, XP010529022 ISBN: 0-7803-6363-9
- KRUMM J ET AL: "Video occupant detection for airbag deployment" APPLICATIONS OF COMPUTER VISION, 1998. WACV '98. PROCEEDINGS., FOURTH IEEE WORKSHOP ON PRINCETON, NJ, USA 19-21 OCT. 1998, LOS ALAMITOS, CA, USA,IEEE COMPUT. SOC, US, 19. Oktober 1998 (1998-10-19), Seiten 30-35, XP010315554 ISBN: 0-8186-8606-5

## Beschreibung

Die vorliegende Erfindung betrifft allgemein ein Verfahren und eine Vorrichtung zur Bestimmung der 3D-Position und insbesondere ein Verfahren und eine Vorrichtung zur Bestimmung der 3D-Kopfposition und/oder Kopfhaltung eines Fahrers oder Beifahrers eines Pkw's. Das erfindungsgemäße Verfahren bzw. die erfindungsgemäße Vorrichtung eignet sich besonders zur Blickrichtungserkennung eines Fahrers oder Beifahrers eines Pkw's sowie zur Müdigkeitsdetektion. Darüber hinaus stellt das,erfindungsgemäße Verfahren bzw. die erfindungsgemäße Vorrichtung eine Möglichkeit zur Bestimmung des Zustands der Augenlieder eines Fahrers oder Beifahrers eines Pkw's zur Verfügung.

### Stand der Technik

Verfahren zur Verknüpfung mehrerer Sensoren zur Bestimmung der 3D-Position von Objekten im Raum sind im Zusammenhang mit sogenannten "Virtual Reality"-Verfahren bekannt. Dabei nimmt beispielsweise ein elektromagnetisches Tracking-System zum einen die Kopfposition und die Sichtrichtung eines Benutzers auf, was als Head-Tracking bezeichnet wird. Zum anderen nimmt das elektromagnetische Tracking-System die Position eines 3D-Eingabegeräts auf (z. B. Stift, 3D-Joystick, Datenhandschuh usw.). Mit diesen 3D-Eingabegeräten hat ein Benutzer die Möglichkeit, mit den Daten direkt in Wechselwirkung zu treten, d. h. er hat die Möglichkeit, sich in der virtuellen Welt zu bewegen und die Datenobjekte anzufassen, zu drehen und zu skalieren.

Ebenfalls sind aus dem Stand der Technik Stereoverfahren zur Blickrichtungserkennung von Fahrzeuginsassen bekannt, beispielsweise FaceLab^{™} der Firma Seeingmachines.

Aus der US-B1-6 324 453 ist ein Verfahren zur Erkennung und Bestimmung der Position eines Pkw-Fahrers bzw. Beifahrers bekannt, wobei ein IR-Sensor oder eine Vielzahl von IR-Sensoren eingesetzt werden. Mittels der IR-Sensoren wird der zu überwachende Pkw-Fahrer erfasst. Die erfasste Information wird dabei anhand von vorgegebenen Mustern ausgewertet, um die Position des Fahrers bzw. Beifahrers für eine gesteuerte Auslösung des Airbags heranzuziehen. Durch diese Steuerung soll die Verletzung des Fahrers bzw. Beifahrers bei einer unfallbedingten Auslösung des Airbags vermieden werden. Die Mustererkennung erfolgt mit Hilfe eines neuronalen Netzwerks oder eines neuronalen Fuzzy-Systems, das die Pkw-Insassen erkennt. In einigen Anwendungen gemäß der US-B1-6 324 453 wird das Mustererkennungssystem mit einer Bildbibliothek ausgestattet, die es erlaubt, einen Vergleich mit den erfassten Bildern zu machen, wodurch eine relativ genaue Positionsbestimmung der sitzenden Pkw-Insassen möglich ist, wobei vermieden wird, dass eine Erfassung der Kopfposition erforderlich ist.

Eine Vorrichtung zur Bestimmung der Kopfposition eines Pkw-Insassen in Anwesenheit von Gegenständen, die die Sicht von Sensoren zum Kopf des Insassen verdecken, ist aus der US-B1-6 088 640 bekannt. Die Vorrichtung der US-B1-6 088 640 ist dazu ausgebildet, die Kopfstützen eines Pkw's durch Schrittmotoren optimal zur Kopfposition eines Insassen zu positionieren, um im Falle einer Kollision mit einem nachfahrenden Pkw, Verletzungen der Insassen zu vermeiden. In einer Ausführungsform der US-A1-6 088 640 besteht die Sensorik zur Bestimmung der Kopfposition eines Fahrzeuginsassen aus einem Ultraschallsender, einem Ultraschallempfänger und einem Kontaktsensor, die alle in einer Kopfstütze des Pkw's angebracht sind. Die Ultraschallsensoren bestimmen den Abstand des Kopfes zur Stütze und regeln solange deren Position, bis der Abstand einen minimalen Wert einnimmt. Die Ultraschallsensoren bestimmen auch den Längenabstand der Kopfstütze zum Kopf des Insassen. Letztere Bestimmung kann durch die ungenaue Ausrichtung des Kopfes mit den Ultraschallsensoren oder durch interferierende Gegenstände wie z.B. Hut, Kragen oder Frisur des Insassen falsche Ergebnisse liefern. Diese Fehlerquelle wird beseitigt, indem die Bewegung der Kopfstütze beim Kontakt des Kopfes mit dem Kontaktsensor gestoppt wird. Somit kann eine optimale Position der Kopfstütze bestimmt werden. In einer Abwandlung werden in der US-B1-6 088 640 ein Ultraschallsender und drei Ultraschallempfänger bereitgestellt, und die Erfassung der Kopfposition erfolgt mittels eines neuronalen Netzwerks oder eines anderen Mustererkennungssystems. Diese Anordnung mit einer Vielzahl von Ultraschallempfängern, die an einer Vielzahl von Stellen an der Kopfstütze angeordnet sind, gestattet eine Erkennung der Kopfposition, selbst wenn ein Hindernis, wie oben erwähnt, vorliegt.

EP-A-1134691, welches als nächstliegender Stand der Technik gesehen wird, zeigt ein Verfahren zur Bestimmung der 3D-Position von Fahrzeuginsassen mit folgenden Schritten : Beobachtung der Fahrzeuginsassen mit mindestens zwei Kameras, die derart angeordnet sind, dass diese nicht nach einem Stereoausatz betrieben werden; Extraktion geeigneter Merkmale aus den aufgezeichneten Video daten der Fahrzeuginsassen; und Verifikation der extrahierten Merkmale mittels Mustererhennung.

Angesichts des Standes der Technik ist es eine Aufgabe der vorliegenden Erfindung ein Verfahren und eine Vorrichtung zur Bestimmung von 3D-Positionen bereitzustellen, das bzw. die zuverlässig und auf eine einfache Art und Weise, unter Verwendung von mehr als einer Kamera, die Kopfposition von Fahrzeuginsassen bestimmt.

Im Rahmen der obigen Aufgabe besteht eine weitere Aufgabe der Erfindung in der Bereitstellung eines Verfahrens und einer Vorrichtung zur Erkennung der Blickrichtung eines Insassen eines Pkw's. Darüber hinaus besteht eine zusätzliche Aufgabe der vorliegenden Erfindung in der Bereitstellung eines Verfahrens und einer Vorrichtung zur Detektion und Verfolgung der Augenlieder von Fahrzeugsinsassen.

### Zusammenfassung der Erfindung

Diese Aufgabe sowie weitere der nachstehenden Beschreibung zu entnehmenden Aufgaben werden mit einem Verfahren bereitgestellt, das zur Bestimmung der 3D-Position von Fahrzeuginsassen die folgenden Schritte umfasst: Beobachtung der Fahrzeuginsassen mit mindestens zwei Kameras, die derart angeordnet sind, dass diese nicht nach einem Stereoansatz betrieben werden ; Extraktion geeigneter Merkmale aus den erfassten Videodaten der Fahrzeuginsassen; Initialisierung eines Trackingschritts anhand eines Kopfmodells; Verifikation der extrahierten Merkmale mittels Mustererkennung; und Tracking der verifizierten Merkmale nur anhand des Kopfmodells.

Die erfindungsgemäße Vorrichtung zur Bestimmung der 3D-Position von Fahrzeuginsassen umfasst folgendes: mindestens zwei Kameras zur Beobachtung der Fahrzeuginsassen, die derart angeordnet sind, dass diese nicht nach einem Stereoansatz betrieben werden; und einen Controller, der folgendes umfasst: Mittel zur Extraktion geeigneter Merkmale aus den erfassten Videodaten der Fahrzeuginsassen; Mittel zur Initialisierung eines Trackingschritts anhand eines Kopfmodells; Mittel zur Verifikation der extrahierten Merkmale mittels Mustererkennung; und Mittel zum Tracking der verifizierten Merkmale nur anhand des Kopfmodells.

Weitere vorteilhafte Merkmale der Erfindung sind in den anliegenden Unteransprüchen ausgeführt.

Weitere Merkmale und Vorteile der vorliegenden Erfindung sowie der Aufbau und die Wirkungsweise verschiedener Ausführungsformen der vorliegenden Erfindung werden unten mit Bezug auf die begleitenden Zeichnungen beschrieben. Die begleitenden Zeichnungen veranschaulichen die vorliegende Erfindung und dienen zusammen mit der Beschreibung weiterhin dazu, die Grundsätze der Erfindung zu erklären und einem Fachmann auf dem betreffenden Gebiet zu ermöglichen, die Erfindung zu implementieren und zu verwenden. Dabei zeigt:
Fig. 1 eine schematische Darstellung einer ersten Ausführungsform der erfindungsgemäßen Vorrichtung; und
Fig. 2 eine schematische Darstellung einer zweiten Ausführungsform der erfindungsgemäßen Vorrichtung.

### Beschreibung der bevorzugten Ausführungsformen der Erfindung

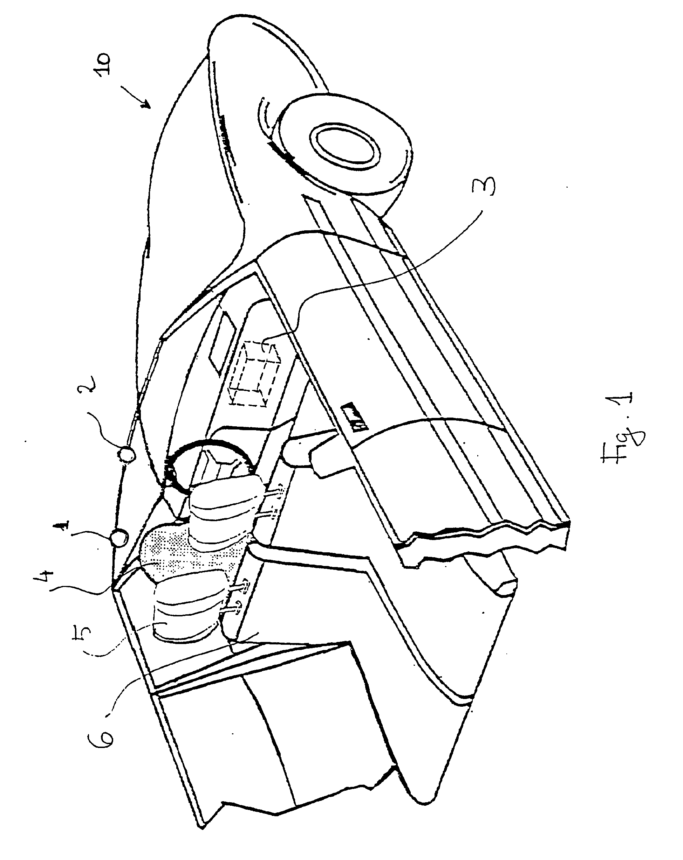

Unter Bezugnahme auf die Fig. 1 wird eine erste Ausführungsform der erfindungsgemäßen Vorrichtung zur Bestimmung der Kopfposition von Fahrzeuginsassen gezeigt, in der zwei Kameras 1 und 2 im Frontbereich eines schematisch gezeigten Fahrzeugs 10 wie gezeigt angebracht sind. In einer besonders bevorzugten Ausgestaltungsform der Erfindung können die Kameras auch derart angebracht sein, dass sich diese direkt vor dem Gesichtsfeld des Fahrers befinden, insbesondere an der Instrumententafel angebracht sind. Die Kameras 1 und 2 können fest ausgerichtet sein oder mit Hilfe von nicht gezeigten Stellmotoren jeweils auf einen Fahrer und einen Beifahrer ausgerichtet werden. Wobei entweder die Kameras kalibriert werden müssen, beispielsweise unter Zuhilfenahme eines Schachbrettmusters, oder aber die gegenseitige Position und Orientierung der Kameras bekannt sein muss. Es ist denkbar, jeweils ein Kamerapaar für den Fahrer bzw. Beifahrer zur Verfügung zu stellen. Die Kameras 1 und 2 sind über einen geeignete Verbindung oder Übertragungsstrecke (z. B. Glasfaser, Bluetooth, WLAN, Verdrahtung oder dergleichen) mit einem gestrichelt gezeigten Controller 3 verbunden, der beispielsweise im Bordcomputer des Fahrzeugs 10 implementiert werden kann.

Nach einem wichtigen Aspekt der vorliegenden Erfindung müssen die Kameras 1 und 2 nicht notwendigerweise nach einem Stereoansatz betrieben werden. Die Kameras 1 und 2 sind auch nicht notwendigerweise synchronisiert. Es ist daher möglich, die Kameras 1 und 2 mit unterschiedlichen Blickfeldern so zu positionieren, dass ein Auge eines Fahrers 4 immer sichtbar ist. Diese Positionierung ist erfindungsgemäß nicht problematisch, da das Blickfeld des Kammerapaars 1 und 2, wie erwähnt, nicht notwendigerweise einem Stereoansatz genügen muss, so dass das Blickfeld wesentlich größer als beim Stereoansatz sein kann.

Die Kameras 1 und 2 können beispielsweise im sichtbaren Bereich oder im IR-Bereich betrieben werden. Es ist jedoch auch möglich abbildende Sensoren, welche in anderen Wellenlängenbereichen arbeiten, mit analoger Wirkungsweise erfindungsgemäß zum Einsatz zu bringen.

Der Controller 3 empfängt die Videodaten von den Kameras 1 und 2, extrahiert geeignete Gesichts- bzw. Formmerkmale des Insassen (z. B. Augen, Nasenlöcher, Mundwinkel, Augenbrauen, Haaransatz usw.), und führt ein an und für sich bekanntes Trackingverfahren aus, das nachstehend in Verbindung mit der Wirkungsweise der erfindungsgemäßen Vorrichtung erläutert wird.

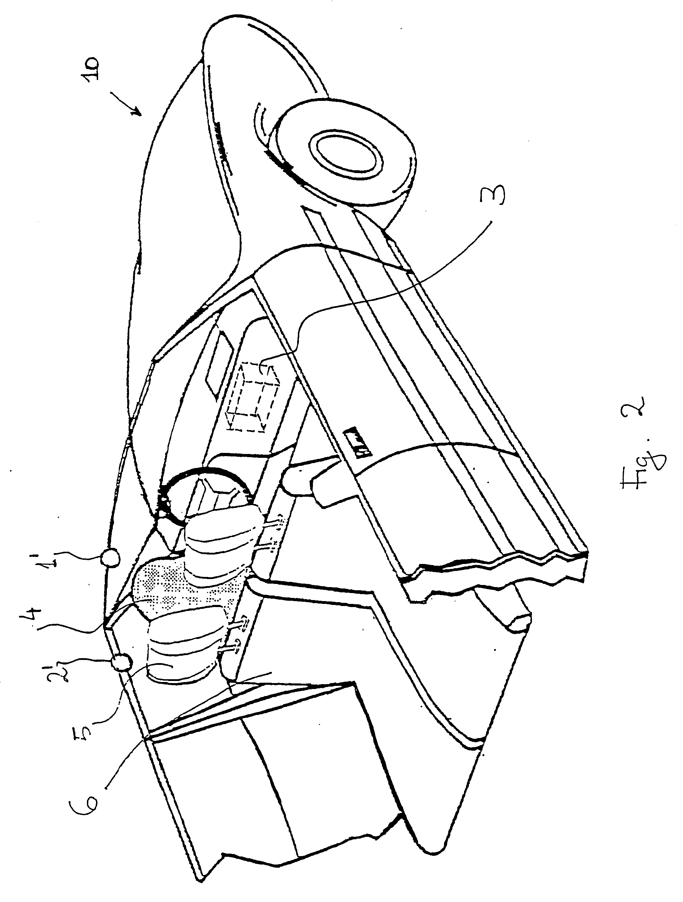

Unter Bezugnahme auf die Fig. 2 wird eine zweite Ausführungsform der erfindungsgemäßen Vorrichtung zur Bestimmung der Kopfposition von Fahrzeuginsassen gezeigt, in der eine erste Kamera 1' im Frontbereich des schematisch gezeigten Fahrzeugs 10 und eine zweite Kamera 2' in dessen Seitenbereich wie gezeigt angebracht sind.

Analog zur Fig. 1 können die Kameras 1' und 2' der Fig. 2 fest ausgerichtet sein oder mit Hilfe von nicht gezeigten Stellmotoren jeweils auf den Fahrer, den Beifahrer oder einen weiteren Insassen ausgerichtet werden. Die Kameras 1' und 2' der Fig. 2 sind erfindungsgemäß ebenfalls nicht notwendigerweise nach einem Stereoansatz positioniert und sind auch nicht notwendigerweise synchronisiert. Somit wird, wie mit der Anordnung der Fig. 1, ein größeres Sichtfeld bereitgestellt.

Die nachstehend geschilderte Wirkungsweise der Ausführungsformen der Figuren 1 und 2 ist gleich.

Zunächst werden in einem ersten Schritt gemäß der Erfindung der Insasse bzw. die Insassen des Fahrzeugs mit derart angebrachten Kameras aufgezeichnet, dass nicht notwendigerweise ein Stereoansatz zwischen den Kameras besteht. Solchermaßen sind die Kameras nicht notwendigerweise synchronisiert.

In einem zweiten Schritt erfolgt gemäß der vorliegenden Erfindung die Extraktion von Gesichts- oder Formmerkmalen des Insassen bzw. der Insassen des Pkw's, insbesondere der Augen, der Nasenlöcher, des Mundwinkels, der Augenbrauen, des Haaransatzes oder dergleichen.

In einem weiteren Schritt erfolgt die Initialisierung eines Trackingverfahrens anhand eines anthropometrischen Modells des Kopfes. Als besonders vorteilhaft hat sich erfindungsgemäß ein Trackingverfahren nach Greg Wech und Gary Bishop erwiesen, das in "SCAAT: Incremental Tracking with Incomplete Information", 1996, University of North Carolina at Chapel Hill, CB 3175, Sitterson Hall, Chapel Hill, NC, 27599-3175 oder "One-Step-at-a-Time Tracking", 1996, University of North Carolina at Chapel Hill, CB 3175, Sitterson Hall, Chapel Hill, NC, 27599-3175, beschrieben wird. Diese Trackingverfahren nach dem Stand der Technik bieten eine wesentlich verbesserte Schätzungsrate und Latenz, eine verbesserte Genauigkeit und einen verbesserten Rahmen für die Vereinigung von Daten, die von einer Vielzahl nicht notwendigerweise synchronisierter Sensoren (Kameras) herrühren. Der Inhalt der zwei oben genannten Wech et al. Veröffentlichungen wird hiermit durch Bezugnahme vollständig eingeschlossen. Beide Veröffentlichungen sind unter www.cs.unc.edu/ als TR96-051 bzw. TR96-021 verfügbar.

Erfindungsgemäß basiert das Tracking auf Kalman-Filterung aller aufgezeichneten Merkmale, wobei die Kameras nicht notwendigerweise wie beim Stereoansatz synchronisiert sein müssen. In einer vorteilhaften Weise kann beim asynchronen Betrieb mit mehreren Kameras entsprechend der Anzahl der Kameras ein Vielfaches an Bildern in der gleichen Zeit aufgezeichnet werden.

In einem weiteren Schritt wird gemäß der vorliegenden Erfindung die Verfikation der detektierten Merkmale mit Verfahren der statistischen Mustererkennung durchgeführt. Hier werden bekannte Mustererkennungsverfahren, wie beispielsweise neuronale Netzwerke, neuronale Fuzzy-Systeme, und Mustererkennungssysteme mit Bildbibliothek eingesetzt, die zum Teil gemäß dem in der Einleitung der vorliegenden Beschreibung geschilderten Stand der Technik implementiert werden.

Auf den Verifikationsschritt folgt ein Trackingschritt der verifizierten Merkmale anhand des Kopfmodells.

In einer weiteren Ausbildung des erfindungsgemäßen Verfahrens erfolgt die Blickrichtungserkennung oder die Bestimmung des Zustands der Augenlieder des Insassen bzw. der Insassen mittels bekannter Verfahren. Daraus ist auch eine Müdigkeitsdetektion mit entsprechenden Warnschritten ableitbar. Nach einem weiteren Aspekt des erfindungsgemäßen Verfahrens ist eine Detektion der Kopfhaltung des Insassen bzw. der Insassen möglich.

Die vorliegende Erfindung hat eine Vielzahl von praktischen Anwendungen, von denen nachstehend einige exemplarisch aufgezählt werden.

So ermöglicht die Bestimmung der 3D-Kopfposition von Fahrer oder Beifahrer z.B. eine situationsangepasste Auslösung des Airbags. Die Auslösung des Airbags kann abhängig von der erfassten Position durch den Controller 3 verhindert werden, falls in dieser Position das Risiko einer Verletzung des Fahrers oder Beifahrers besteht.

Die Bestimmung der Kopfhaltung bzw. der Blickrichtung der Insassen erlaubt im Zusammenspiel mit einer fahrzeugüblichen Umgebungssensorik eine situationsangepasste Warnung des Fahrers und gegebenenfalls des Beifahrers.

Die Kenntnis des Augenzustandes (offen/geschlossen) kann zur Müdigkeitsdetektion verwendet werden. Hierzu kann auch die aus den Videodaten extrahierte Augen-Blinzelrate herangezogen werden.

Die exakte Bestimmung der 3D-Kopfposition erlaubt eine adaptive Einstellung der Kopfstütze 5 zur individuellen Optimierung der Insassensicherheit. Die erfindungsgemäße Vorrichtung und das erfindungsgemäße Verfahren überwindet die aus der US-B1-6 088 640 bekannten Probleme, die durch die ungenaue Ausrichtung des Kopfes mit den Sensoren oder durch interferierende Gegenstände entstehen können.

Ferner kann bei bekannter Augenposition eine automatische, individuelle Einstellung des Sitzes 6 erfolgen.

Außerdem kann die Erfindung zur Bedienung eines Bildtelefons für Telematikanwendungen im Fahrzeug genutzt werden. Auch wäre eine Erkennung der Gesichtsmerkmale des Fahrers zum Zwecke der Authentifizierung denkbar.

Die vorliegende Erfindung kann vielfältig verändert werden. So kann z.B. die Anzahl und Position der in den Figuren 1 und 2 gezeigten Kameras verändert werden, ohne sich vom Schutzumfang der Erfindung zu lösen. Dabei ist es denkbar, mehr als ein Kamerapaar einzusetzen, wobei jedes Paar auf einen Fahrzeuginsassen ausgerichtet und nicht notwendigerweise nach einem Stereoansatz betrieben werden muss. Es ist ebenfalls denkbar, wie bereits erwähnt, schwenkbare Kamerapaare einzusetzen.

Wenn Merkmale in den Ansprüchen mit Bezugszeichen versehen sind, so sind diese Bezugszeichen lediglich zum besseren Verständnis der Ansprüche vorhanden. Dementsprechend stellen solche Bezugszeichen keine Einschränkungen des Schutzumfangs solcher Elemente dar, die nur exemplarisch durch solche Bezugszeichen gekennzeichnet sind.

## Patentansprüche

1. Verfahren zur Bestimmung der 3D-Position von Fahrzeuginsassen, das folgende Schritte umfasst:
Beobachtung der Fahrzeuginsassen mit mindestens zwei Kameras (1, 2, 1', 2'), die derart angeordnet sind, dass diese nicht nach einem Stereoansatz betrieben werden;
Extraktion geeigneter Merkmale aus den aufgezeichneten Videodaten der Fahrzeuginsassen ;
Initialisierung eines Trackingverfahrens anhand eines Kopfmodells ;
Verifikation der extrahierten Merkmale mittels Mustererkennung; und
Tracking der verifizierten Merkmale nur anhand des Kopfmodells.

2. Verfahren nach Anspruch 1, worin die Merkmale aus einer Gruppe gewählt sind, die aus Gesichts-oder Formmerkmalen der Insassen bestehen.

3. Verfahren nach Anspruch 2, worin die Gesichts-oder Formmerkmale Augen, Nasenlöcher, Mundwinkel, Augenbrauen oder Haaransatz umfassen.

4. Verfahren nach einem oder mehreren der Ansprüche 1-3, worin die Kameras (1, 2, 1', 2') nicht synchronisiert sein müssen.

5. Verfahren nach einem oder mehreren der Ansprüche 1-4, worin die Kameras (1, 2, 1', 2') mit unterschiedlichen Blickfeldern derart positioniert sind, dass ein Auge eines Fahrers (4) immer sichtbar ist.

6. Verfahren nach einem oder mehreren der Ansprüche 1-5, das weiterhin den Schritt der Bestimmung der Kopfhaltung von Insassen umfasst.

7. Verfahren nach einem oder mehreren der Ansprüche 1-6, das weiterhin den Schritt der Bestimmung der Blickrichtung von Insassen umfasst.

8. Verfahren nach einem oder mehreren der Ansprüche 1-7, das weiterhin den Schritt der Bestimmung des Zustands der Augenlider der Insassen umfasst.

9. Verfahren nach einem oder mehreren der Ansprüche 1-8, worin der Trackingschritt auf die Kalman-Filterung aller aufgezeichneten Merkmale der Kameras (1, 2 ; 1', 2') basiert, wobei die Kameras asynchron betrieben werden können.

10. Verfahren nach einem oder mehreren der Ansprüche 1-9, worin das Kopfmodell ein anthropometrisches Modell ist.

11. Verfahren nach einem oder mehreren der Ansprüche 1-10, worin die Mustererkennung eine statistische Mustererkennung ist.

12. Vorrichtung zur Bestimmung der 3D-Position von Fahrzeuginsassen, die folgendes umfasst: mindestens zwei Kameras (1, 2, 1', 2') zur Beobachtung der Fahrzeuginsassen, die derart angeordnet sind, dass diese nicht nach einem Stereoansatz betrieben werden; und einen Controller (3), der folgendes umfasst :
Mittel zur Extraktion geeigneter Merkmale aus den aufgezeichneten Videodaten der Fahrzeuginsassen ;
Mittel zur Initialisierung eines Trackingschritts anhand eines Kopfmodells ; Mittel zur Verifikation der extrahierten Merkmale mittels Mustererkennung; und Mittel zum Tracking der verifizierten Merkmale nur anhand des Kopfmodells.

13. Vorrichtung nach Anspruch 12, worin die Merkmale aus einer Gruppe gewählt sind die aus Gesichts-oder Formmerkma- len der Insassen bestehen.

14. Vorrichtung nach Anspruch 13, worin die Gesichts- oder Formmerkmale Augen, Nasenlöcher, Mundwinkel, Augenbrauen oder Haaransatz umfassen.

15. Vorrichtung nach einem oder mehreren der Ansprüche 12-14, worin die Kameras (1, 2, 1', 2') nicht synchronisiert sein müssen.

16. Vorrichtung nach einem oder mehreren der Ansprüche 12-15, worin die Kameras (1, 2, 1', 2') mit unterschiedlichen Blickfeldern derart positioniert sind, dass ein Auge eines Fahrers (4) immer sichtbar ist.

17. Vorrichtung nach einem oder mehreren der Ansprüche 12-16, die weiterhin Mittel zur Bestimmung der Kopfhaltung von Insassen umfasst.

18. Vorrichtung nach einem oder mehreren der Ansprüche 12-17, die weiterhin Mittel zur Bestimmung des Zustands der Augenlieder der Insassen umfasst.

19. Vorrichtung nach einem oder mehreren der Ansprüche 12-18, worin die Mittel zum Tracking ausgebildet sind, die Kalman-Filterung aller aufgezeichneten Merkmale der Kameras (1, 2 ; 1', 2') durchzuführen, wobei die Kameras asynchron betrieben werden können.

20. Vorrichtung nach einem oder mehreren der Ansprüche 12-19, worin die Kameras (1, 2) im Frontbereich des Fahrzeugs (10) angeordnet sind.

21. Vorrichtung nach einem oder mehreren der Ansprüche 12-19, worin eine Kamera (1') im Frontbereich und die andere Kamera im Seitenbereich des Fahrzeugs (10) angeordnet ist.

22. Vorrichtung nach einem oder mehreren der Ansprüche 12-21, worin der Controller (3) weiterhin Mittel umfasst, um anhand der detektierten Kopfposition die Auslösung eines Airbags und/oder die Einstellung einer Kopfstütze (5) und/oder die Einstellung eines Sitzes des Fahrzeugs zu steuern

## Claims

1. Method for determining the three-dimensional position of vehicle passengers which comprises the following steps:
observing the vehicle passengers by means of at least two cameras (1, 2, 1', 2') which are disposed in such a way that they operate in non-stereo mode;
extracting appropriate characteristics from the recorded video data of the vehicle passengers;
initializing a tracking method by means of a head model;
verifying the extracted characteristics by means of pattern recognition; and
tracking the verified characteristics by means of the head model only.

2. Method according to Claim 1, wherein the characteristics are selected from a group which consists of facial or shape characteristics of the passengers.

3. Method according to Claim 2, wherein the facial or shape characteristics comprise eyes, nostrils, corners of the mouth, eyebrows or hairline.

4. Method according to one or more of Claims 1-3, wherein the cameras (1, 2, 1', 2') do not need to be synchronized.

5. Method according to one or more of Claims 1-4, wherein the cameras (1, 2, 1', 2'), having different fields of view, are positioned in such a manner that one eye of a driver (4) is always visible.

6. Method according to one or more of Claims 1-5, which furthermore comprises the step of determining the head attitude of passengers.

7. Method according to one or more of Claims 1-6, which also comprises the step of determining the direction of view of passengers.

8. Method according to one or more of Claims 1-7, which also comprises the step of determining the state of the eyelids of the passengers.

9. Method according to one or more of Claims 1-8, wherein the tracking step is based on the Kalman filtering of all recorded characteristics of the cameras (1, 2; 1', 2'), wherein the cameras can be operated asynchronously.

10. Method according to one or more of Claims 1-9, wherein the head model is an anthropometric model.

11. Method according to one or more of Claims 1-10, wherein the pattern recognition is a statistical pattern recognition.

12. Device for determining the three-dimensional position of vehicle passengers, comprising the following: at least two cameras (1, 2, 1', 2') for observing the vehicle passengers, which are disposed in such a way that they operate in non-stereo mode; and a controller (3) which comprises the following:
means for extracting appropriate characteristics from the recorded video data of the vehicle passengers;
means for initializing a tracking step by means of a head model; means for verifying the extracted characteristics by means of pattern recognition; and
means for tracking the verified characteristics by means of the head model only.

13. Device according to Claim 12, wherein the characteristics are selected from a group which consists of facial or shape characteristics of the passengers.

14. Device according to Claim 13, wherein the facial or shape characteristics comprise eyes, nostrils, corners of the mouth, eyebrows or hairline.

15. Device according to one or more of Claims 12-14, wherein the cameras (1, 2, 1', 2') do not need to be synchronized.

16. Device according to one or more of Claims 12-15, wherein the cameras (1, 2, 1', 2), having different fields of view, are positioned in such a manner that one eye of a driver (4) is always visible.

17. Device according to one or more of Claims 12-16, which also comprises means for determining the head attitude of passengers.

18. Device according to one or more of Claims 12-17, which also comprises means for determining the state of the eyelids of the passengers.

19. Device according to one or more of Claims 12-18, wherein the means for tracking are constructed for carrying out the Kalman filtering of all recorded characteristics of the cameras (1, 2; 1', 2'), wherein the cameras can be operated asynchronously.

20. Device according to one or more of Claims 12-19, wherein the cameras (1, 2) are arranged in the front area of the vehicle (10).

21. Device according to one or more of Claims 12-19, wherein one camera (1') is arranged in the front area and the other camera is arranged in the side area of the vehicle (10).

22. Device according to one or more of Claims 12-21, wherein the controller (3) also comprises means for controlling the release of an airbag and/or the adjustment of a head rest (5) and/or the adjustment of a seat of the vehicle by means of the detected head position.

## Revendications

1. Procédé pour déterminer la position tridimensionnelle des occupants d'un véhicule, lequel comprend les étapes suivantes :
observation des occupants du véhicule avec au moins deux caméras (1, 2, 1', 2') qui sont disposées de telle sorte que celles-ci ne fonctionnent pas comme une pièce rapportée stéréoscopique ;
extraction des caractéristiques appropriées des données vidéo enregistrées des occupants du véhicule ;
initialisation d'un procédé de suivi au moyen d'un modèle de tête ;
vérification des caractéristiques extraites au moyen de la reconnaissance de modèle ; et
suivi des caractéristiques vérifiées seulement au moyen du modèle de tête.

2. Procédé selon la revendication 1, avec lequel les caractéristiques sont choisies dans un groupe qui se compose des caractéristiques de visage ou de forme des occupants.

3. Procédé selon la revendication 2, avec lequel les caractéristiques de visage ou de forme comprennent les yeux, les narines, les coins de la bouche, les sourcils ou la racine des cheveux.

4. Procédé selon une ou plusieurs des revendications 1 à 3, avec lequel les caméras (1, 2, 1', 2') n'ont pas besoin d'être synchronisées.

5. Procédé selon une ou plusieurs des revendications 1 à 4, avec lequel les caméras (1, 2, 1', 2') sont positionnées avec des angles de vision différents de telle sorte qu'un oeil d'un conducteur (4) soit toujours visible.

6. Procédé selon une ou plusieurs des revendications 1 à 5, qui comprend en plus l'étape de détermination de la posture des têtes des occupants.

7. Procédé selon une ou plusieurs des revendications 1 à 6, qui comprend en plus l'étape de détermination du sens d'observation des occupants.

8. Procédé selon une ou plusieurs des revendications 1 à 7, qui comprend en plus l'étape de détermination de l'état des paupières des occupants.

9. Procédé selon une ou plusieurs des revendications 1 à 8, avec lequel l'étape de suivi se base sur le filtrage de Kalman de toutes les caractéristiques enregistrées par les caméras (1, 2; 1', 2'), les caméras pouvant fonctionner de manière asynchrone.

10. Procédé selon une ou plusieurs des revendications 1 à 9, avec lequel le modèle de tête est un modèle anthropométrique.

11. Procédé selon une ou plusieurs des revendications 1 à 10, avec lequel la reconnaissance de modèle est une reconnaissance de modèle statistique.

12. Dispositif pour déterminer la position tridimensionnelle des occupants d'un véhicule comprenant ce qui suit : deux caméras (1, 2, 1', 2') pour observer les occupants du véhicule qui sont disposées de telle sorte que celles-ci ne fonctionnent pas comme une pièce rapportée stéréoscopique et un contrôleur (3) qui comprend ce qui suit :
des moyens pour extraire des caractéristiques appropriées des données vidéo enregistrées des occupants du véhicule ;
des moyens pour initialiser un procédé de suivi au moyen d'un modèle de tête ;
des moyens pour vérifier les caractéristiques extraites au moyen de la reconnaissance de modèle ; et
des moyens pour suivre les caractéristiques vérifiées seulement au moyen du modèle de tête.

13. Dispositif selon la revendication 12, avec lequel les caractéristiques sont choisies dans un groupe qui se compose des caractéristiques de visage ou de forme des occupants.

14. Dispositif selon la revendication 13, avec lequel les caractéristiques de visage ou de forme comprennent les yeux, les narines, les coins de la bouche, les sourcils ou la racine des cheveux.

15. Dispositif selon une ou plusieurs des revendications 12 à 14, avec lequel les caméras (1, 2, 1', 2') n'ont pas besoin d'être synchronisées.

16. Dispositif selon une ou plusieurs des revendications 12 à 15, avec lequel les caméras (1, 2, 1', 2') sont positionnées avec des angles de vision différents de telle sorte qu'un oeil d'un conducteur (4) soit toujours visible.

17. Dispositif selon une ou plusieurs des revendications 12 à 16, qui comprend en plus des moyens pour déterminer la posture des têtes des occupants.

18. Dispositif selon une ou plusieurs des revendications 12 à 17, qui comprend en plus des moyens pour déterminer l'état des paupières des occupants.

19. Dispositif selon une ou plusieurs des revendications 12 à 18, avec lequel les moyens de suivi sont configurés pour effectuer le filtrage de Kalman de toutes les caractéristiques enregistrées par les caméras (1, 2; 1', 2'), les caméras pouvant fonctionner de manière asynchrone.

20. Dispositif selon une ou plusieurs des revendications 12 à 19, avec lequel les caméras (1, 2) sont installées dans la zone avant du véhicule (10).

21. Dispositif selon une ou plusieurs des revendications 12 à 19, avec lequel une caméra (1') est installée dans la zone avant et une autre caméra dans la zone latérale du véhicule (10).

22. Dispositif selon une ou plusieurs des revendications 12 à 21, avec lequel le contrôleur (3) comprend en plus des moyens pour, au moyen de la position détectée de la tête, commander le déclenchement d'un coussin gonflable de sécurité et/ou le réglage d'un appui-tête (5) et/ou le réglage d'un siège du véhicule.
